(19) Europäisches Patentamt
European Patent Office
Office européen des brevets

(11) **EP 1 031 923 A2**

(12) **EUROPEAN PATENT APPLICATION**

(43) Date of publication:
30.08.2000 Bulletin 2000/35

(51) Int. Cl.⁷: **G06F 9/45**

(21) Application number: 00400301.8

(22) Date of filing: 03.02.2000

(84) Designated Contracting States:
AT BE CH CY DE DK ES FI FR GB GR IE IT LI LU MC NL PT SE
Designated Extension States:
AL LT LV MK RO SI

(30) Priority: 04.02.1999 US 244133

(71) Applicant: Sun Microsystems Inc.
Palo Alto, California 94303 (US)

(72) Inventor: Lewis, Bradley R.
Broomfield, CO 80020 (US)

(74) Representative:
Chameroy, Claude et al
c/o Cabinet Malémont
42, avenue du Président Wilson
75116 Paris (FR)

(54) **Method and system for implementing a balanced distribution of processor resources**

(57) An improved distribution system that optimally balances a loop instruction with multiple iterations over a number of threads and then assigns the threads to either multiple computers in a network or multiple processors on a single machine. A balance or relatively equal distribution of tasks between the multiple processors promotes a more efficient use of computing resources within the system. After initially dividing the number of iterations among the number of processors, the improved distribution system evenly distributes the remaining iterations over the processors, resulting in a more efficient allocation of resources in the distributed processing environment.

FIG. 4

EP 1 031 923 A2

**Description**

**BACKGROUND OF THE INVENTION**

The present invention relates to the field of parallel computing and, more particularly to distributing a number of loop instruction iterations among multiple processors in a distributed network or multiple computing threads in a parallelized computing environment.

The term "multi-threading" refers to the partitioning of a computer program into logically independent "threads" of control that can execute in parallel. Each thread includes a sequence of instructions and data used by the instructions to carry out a particular program task, such as a computation or input/output function. In a computer system with multiple processors, at least two processors must execute at least one thread to achieve multi-processing or parallelization of the program. If a single processor serially executes all threads of a multithreaded program, the program fails to achieve parallelization.

Although a single processor can execute instructions of only one thread at a time, the processor can execute multiple threads in parallel by, for example, executing instructions corresponding to one thread until reaching a selected instruction, suspending execution of that thread, and executing instructions corresponding to another thread, until all threads have completed. In this scheme, as long as the processor has begun executing instructions for more than one thread during a given time interval, all executing threads are said to be "running" during that time interval, and multi-processing is achieved. Thus, the term multiprocessing includes both running a program using multiple processors as well as executing multiple threads in parallel on a single processor. Multiprocessing computer systems (sometimes referred to as parallel computer systems), by performing several operations simultaneously, generally run programs faster and more efficiently than serial computer systems, which have only a single processor performing a single operation at a time.

In a distributed computing network, users can harness the processing capabilities of numerous computers coupled to the network. Distributed networks may take the form of separate multiple processors residing in separate computers or parallelized systems in which processors or threads share a global memory resource. In these environments, programs with many different independent calculations can be quickly processed in parallel by dividing the calculations among different threads and assigning the threads to different processors in the network.

To assign a task among multiple processors within a network, conventional distribution systems exist that calculate the number of operations each processor will perform. In a system implemented with a Fortran-based compiler, for example, this system distributes the iterations of a loop instruction, such as a DO loop. When distributing the iterations the system tends to distribute the iterations when the number of iterations (*e.g.*, the number of times a loop must run) is not equally divisible by the number of processors, because the remainder is always assigned to the first processor. Thus, for example, in an eight processor system having a loop instruction with fifteen iterations, each processor performs a single iteration and the remaining iterations are performed by the first processor. Such a resulting imbalance may overburden a single processor, while leaving others in the system under utilized.

Given the number of processors (NCPU) and the total number of iterations (I), a compiler can compute the maximum number of iterations performed by each processor, or thread by determining $M = I/NCPU + MOD(I, NCPU)$. The number of processors and the number of iterations may be manually entered by a computer programer or the compiler may determine these values from a system environmental setting. In this calculation, the function M(I, NCPU) returns those iterations left after a nearest integer division of I by NCPU (*i.e.*, extra iterations). This conventional method for allocating the iterations is determined by the following Fortran code:

```
Iterations_Per = I/NCPU
Extra_Iterations = M (I, NCPU)
for    i = 1 to NCPU do
          Mi = I/NCPU
M1 =  M1 + M(I, NCPU)

C$PAR DOALL  (parallelized operation)
        DO 10, I = 1, 15
            CALL DOWORK (I); where "DOWORK" represents some arbitrary
calculation
        10   CONTINUE
```

In this code, the C$PAR program is a directive, written by a programmer, informing the compiler indicating that it can parallelize the DOALL instruction loop. During compilation, the compiler parallelizes the loop by generating code that, when executed by a controlling operating system, spawns a number of threads, one for each processor. Use of this distribution scheme, however, results in an unbalanced distribution because the first processor (M1) receives the all the remainder iterations.

Table I provides an example using the conventional method of distribution. Table I shows the number of iterations performed on each processor, the runtime that each iteration takes a constant time X to run, and the scalability achieved with a distributed or parallel processing environment set to one, two, four, and eight processors.

TABLE I

| NCPUs | Distribution | Runtime | Scalability |
|-------|--------------|---------|-------------|
| 1 | 15 | 15X | 1 |
| 2 | 8,7 | 8X | 0.938 |
| 4 | 6,3,3,3 | 6X | 0.625 |
| 8 | 8,1,1,1,1,1,1,1 | 8X | 0.234 |

The scalability factor represents the runtime with one processor divided by the number of processors multiplied by the processor runtime. This parameter is an efficiency factor that evaluates how well the additional processors are operating in the system. The closer the scalability parameter is to one, as in the case with a single processor, the higher the resulting efficiency of the processors in the distribution group. As seen in Table I, the resulting unbalanced load causes a loop instruction to run at the same speed with two processors as with eight processors and the scalability drops far below the ideal level of one, which is wasteful. It is therefore desirable to improve parallel distribution systems.

## SUMMARY OF THE INVENTION

Systems and methods consistent with the present invention provide an improved distribution system that improves over conventional system by optimally balancing a loop instruction with multiple iterations over a number of threads and then assigning the threads to either multiple computers in a network or multiple processors on a single machine. A balance or relatively equal distribution of tasks between the multiple processors promotes a more efficient use of computing resources within the system. To achieve its goal, after initially dividing the number of iterations among the number of processors, the improved distribution scheme does not merely assign the remaining iterations to the first processor like in conventional systems. Instead, the improved distribution system evenly distributes the remaining iterations over the processors. The result is a more efficient allocation of resources in the distributed or parallel computing environment.

Specifically, systems and methods consistent with the present invention provide a computer-executed method for balancing a plurality of loop iterations among a plurality of processors in a data processing system. The method includes determining a number of processors from the plurality of processors that will run a program; determining a number of iterations to be distributed to all the processors such that at least two of the iterations remain undistributed; and distributing the at least two undistributed iterations among at least two of the processors.

Systems and methods consistent with the present invention also provides a data processing system having a plurality of processors. The system includes a memory containing a program store with a plurality of iterations. The program having code configured to distribute the iterations among the processors such that each processor is assigned an equal number of iterations to perform with at least two iterations that remain unassigned. The code further configured to assign the unassigned iterations to at least two of the processors. At least one of the processors that is configured execute the program.

The summary and the following detailed description should not restrict the scope of the claimed invention. Both provide examples and explanations to enable others to practice the invention.

## BRIEF DESCRIPTION OF THE DRAWINGS

The accompanying drawings, which are incorporated in and constitute a part of this specification, illustrate an embodiment of the invention and, together with the description, serve to explain the advantages, and principles of the invention:

Fig. 1 depicts a block diagram of a distributed computing network suitable for use with systems and methods consistent with the present invention;

Fig. 2 depicts a computer of Fig. 1 in more detail;

Fig. 3 depicts a flow diagram of the major steps performed when distributing a multiiteration loop among of number of processors in accordance with systems and methods consistent with the present invention; and

Fig. 4 depicts a flow diagram showing a more detailed version of the steps performed in the distribution method of Fig. 3.

## DETAILED DESCRIPTION

Reference will now be made to preferred embodiments of this invention, examples of which are shown in the accompanying drawings and will be obvious from the description of the invention. In the drawings, the same reference numbers represent the same or similar elements in the different drawings whenever possible.

Systems and methods consistent with the present invention provide an improved distribution system that permit a more efficient use of resources in a distributed or parallel computing environment by more equally allocating instructions of a program among processors. To achieve a better allocation of the processing resources, systems and methods consistent with the present invention implement creates a thread for each processor in the system and divides the number of loop iterations by the number of processors in the system to determine an initial number of iterations to be assigned to each thread. Then, the remainder of the division is evenly distributed among each thread, thus resulting in an improved distribution over conventional systems. To achieve this functionality, a programmer inserts a program loop inside of an outer loop that iterates from one to the number of processors in the system. By using this outer loop, the compiler is instructed to generate code that distributes the inner loop more evenly among the processors.

The improved distribution system improves over conventional systems, because the conventional distribution systems divide the number of loop iterations among the processors by first dividing the number of processors by the number of iterations, assigning each processor a minimum number of iterations and then assigning the remaining iteration to the first processor. The improved distribution system, on the other hand, redistributes the remaining number of iterations among all the processors. Once this second distribution is completed, the program can be executed in accordance with the newly balanced iterations.

In accordance with the systems and methods consistent with present invention, a distributed environment, network, or system encompasses either of the following: (1) multiple processors residing on separate computers; (2) multiple processors, or threads, sharing a common global memory; or (3) a single processor executing a number of threads in parallel. Thus, the improved distribution scheme can be utilized to distribute the program among multiple threads, multiple processors, or multiple machines.

### Computer Network

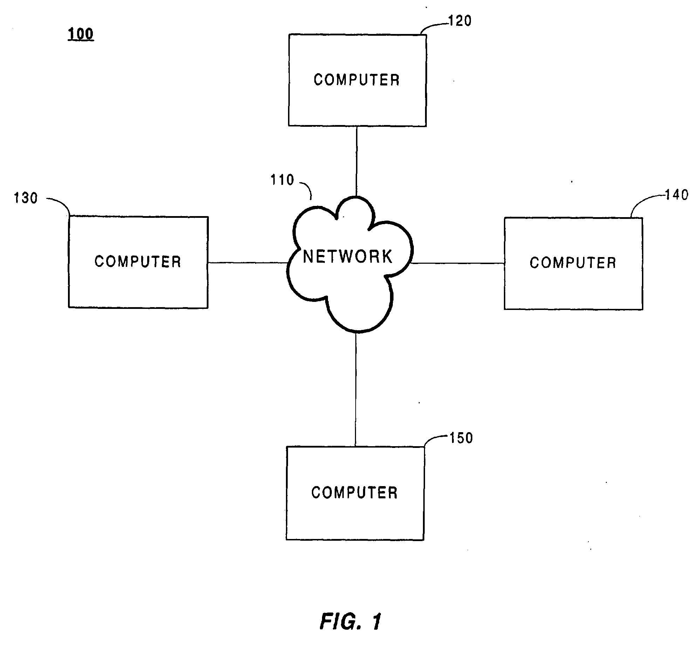

Fig. 1 illustrates a distributed computer system 100 suitable for use with the methods and systems of the present invention. Computer system 100 in Fig. 1 includes a network 110 interconnecting a number of computers 120, 130, 140 and 150. In this configuration, network 100 may be a Local Area Network (LAN), a Wide Area Network (WAN), or the Internet.

Network 110 couples computers 120, 130, 140, and 150 to allow for the sharing of information, the transmission of data, and also the sharing of computational capabilities. The computers may be coupled to network 110 with a network interconnect device such as a router, a switch, or a hub depending on the particular network configuration.

In general, a dynamic distributed computing system designed in accordance with the present invention may be located on each computer system coupled in the system. Accordingly, each computer may operate as either a client or a server depending on the particular request being made and the services being provided. Typically, the client requests that a task is computed on a server computer and the server computer processes the task.

### Computer System

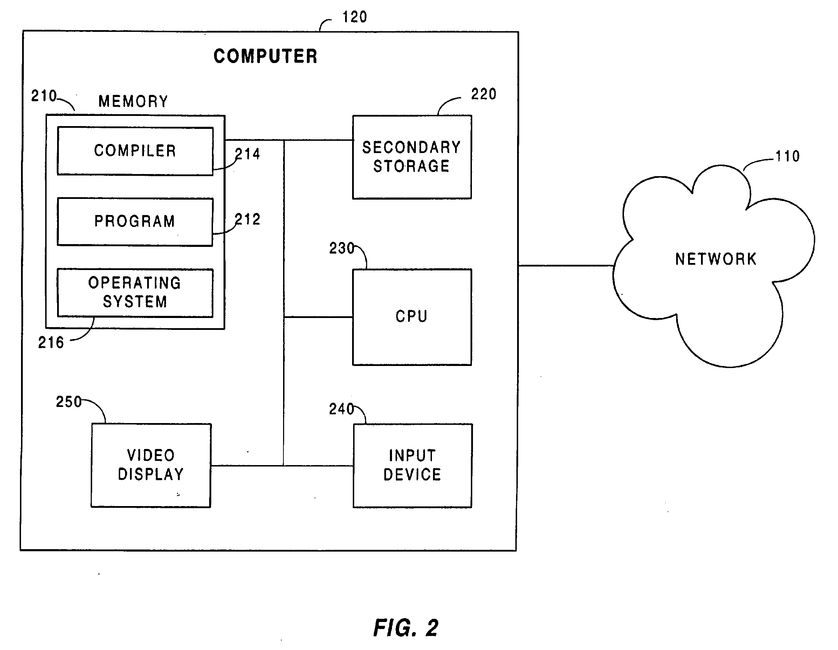

Fig. 2 depicts computer 120 in greater detail. Although computer 120 is depicted, computers 130, 140, and 150 are similarly configured. The description below refers to terms commonly used in describing particular computer systems, such as in an IBM PS/2 personal computer or in a SPARC 2.6 workstation. However, those skilled in the art will appreciate that the description and concepts equally apply to other computer systems such as network computers and even mainframe computers having architectures dissimilar to Fig. 1. Sun, Sun Microsystems, and the Sun logo are trademarks or registered trademarks of Sun Microsystems, Inc. in the United States and other countries. SPARC trademarks are used under license and are trademarks of SPARC International, Inc. in the United States and other countries. Products bearing SPARC trademarks are based upon an architecture developed by Sun Microsystems, Inc.

Computer 120 includes memory 210, secondary storage device 220, central processing unit (CPU) 230, input device 240, and video display 250. For the purposes of this disclosure, the term CPU is interchangeable with the term processor. Memory 210 includes a program 212 stored therein, a compiler 214 for compiling program 212, an operating system 216 used to execute compiled program 212.

Program 212 represents an executable program containing instructions. Compiler 214 is standard program compiler used to generate executable code for program 212. A Sun Fortran-77 5.0 compiler is one well-known compiler example tat may be used in conjunction with the systems and methods consistent with the present invention. Operating system 216 provides the environment for compiler 214 to operate and the instructions required to execute program 212 once compiler 214 has compiled program 212. Solaris 2.6 operating on a Sparc 2.0 workstation is one well-known operating system example that may be used in conjunction with the systems and methods consistent with the present invention.

Although computer 120 is depicted with various components, one skilled in the art will appreciate that this computer can contain additional or different components. Additionally, although aspects of the present invention are described as being stored in memory, one skilled in the art will appreciate that these aspects can also be stored on or read from any other type of computer-readable media, such as secondary storage devices, like hard disks, floppy disks, or CD-ROM; a carrier wave from a network, such as the Internet; or other forms of RAM or ROM.

**Distribution Operation**

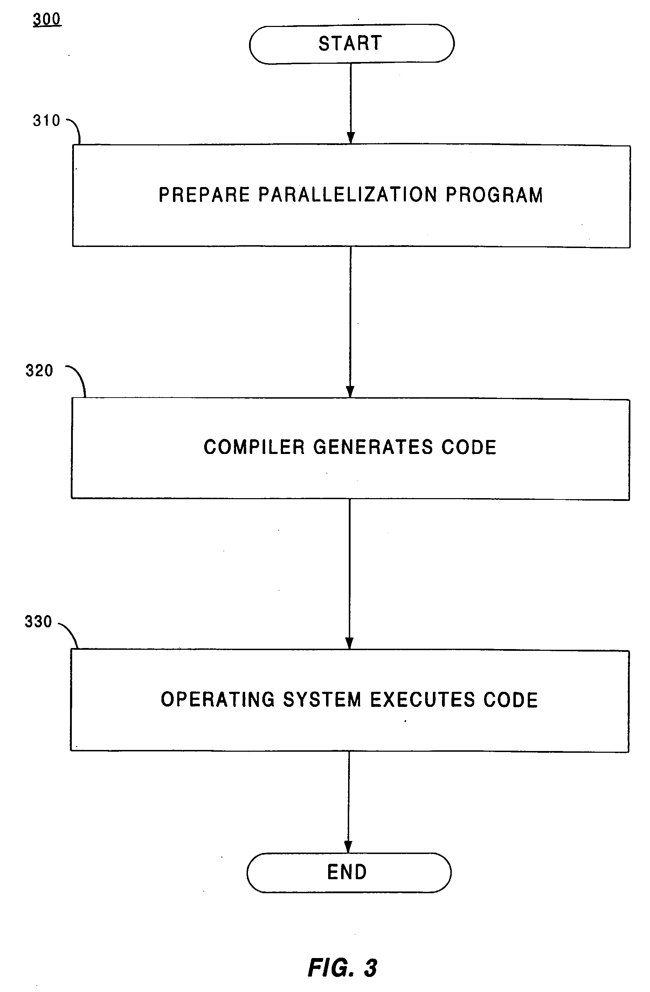

Fig. 3 is a flow diagram showing the major steps of a procedure 300 used for distributing a program with multiple iterations among a plurality of processors. First, a programmer, prepares a program that includes a loop instruction, such as a DO loop, with multiple iterations. If the programmer is working in a multiprocessor environment, this program code and the loop instructions can be parallelized over a number of processors in the system. A system environmental setting provides the number of system processors available to execute the loop instruction. A directive, C$PAR DOALL, will command the compiler that compiles the program that the loop instruction should be performed in parallel. The following represents code consistent with the above description.

```
C$PAR DOALL  (parallelized operation)
        DO 10, I = 1, 15
            CALL DOWORK (I); where "DOWORK" represents some arbitrary
    calculation
        10   CONTINUE
```

In accordance with the systems and methods consistent with the present invention, the programmer inserts an outer loop around the inner DO loop to distribute the iterations evenly among the processors in the system. This outer loop, as discussed below, counts from one to the number of processors to distribute the iterations evenly among the processors or threads in the system.

Once the program has been written it is ready for compilation (step 420). Compiler 214, as described in detail below, uses the directive, C$PAR DOALL to spawn a number of threads over which the loop instructions may be spread. When compilation occurs, compiler 214 uses the environmental setting indicating the number of processors and the number of iterations to generate executable code for program 212. The resulting code is then used to determine the number of iterations that will be performed by each thread or processor in the system.

Finally, at run time, operating system 216 uses the code generated by compiler 214 to distribute the threads to the processors of the system (step 430). Operating system 216 may chose to distribute the threads to a single processor or to multiple processors within the system. In either event, once operating system 216 assigns the threads, it runs program 214 and the assigned directive in parallel across the threads, which produces the result requested by the inner loop.

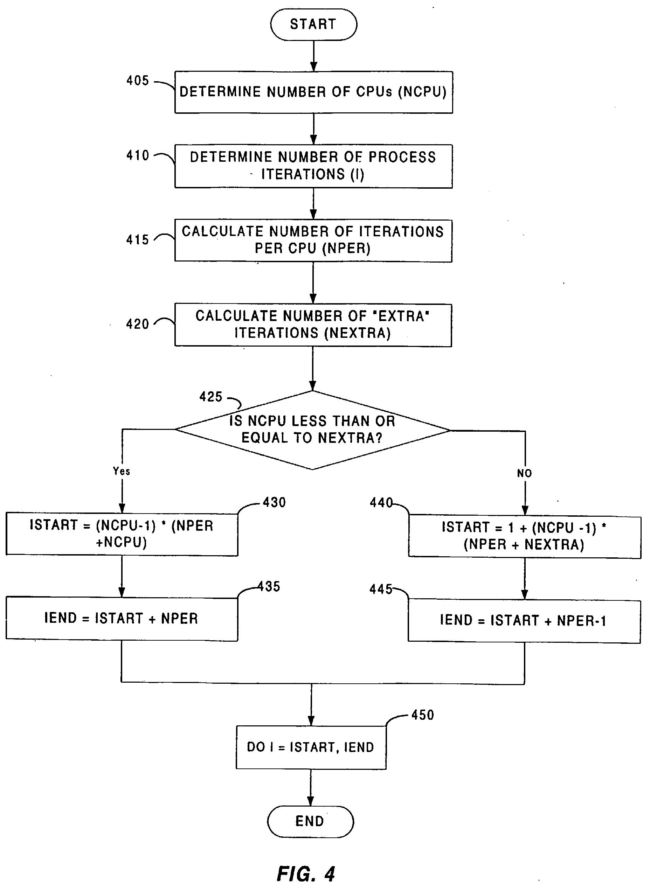

Fig. 4 is a flow diagram of the steps performed by compiler 214 (step 320) consistent with the method shown in Fig. 3. Initially, compiler 214 determines the number of processors (NCPUs) available to carry out a loop instruction within program 212 (step 405). This number may be determined from an environmental setting input when program 212 is compiled, or from a preset system setting input by the programmer. Next, compiler 214 determines the number of program iterations (I) that are necessary to complete the loop instruction within program 212 (step 415). These initial determinations further allow compiler 212 to calculate the minimum number of iterations each processor, or thread, will be assigned to perform (NPER).

If the number of iterations is not equally divisible by the number of processors, ten compiler 214 determines the number of remaining iterations (NEXTRA) that will are left unassigned, given the NCPU value (step 420). This step is accomplished by multiplying NCPU by the number of iterations performed by each processor (NPER), and subtracting the result from the number of iterations in the loop instruction (I).

$$NEXTRA = I-(NPER * NCPU)$$

Once the number of unassigned iterations is determined, compiler 214 then allocates these left over iterations to the number of processors.

This allocation is accomplished by first determining whether NCPU is less than or equal to NEXTRA (step 425). If NCPU is less than or equal to NEXTRA, then a loop instruction is initiated beginning with a calculation of a parameter ISTART and ending with a calculation of parameter IEND. Those skilled in the art will recognize that this type of loop instruction is commonly used in programming languages such as FORTRAN, and the two parameters ISTART IEND represent the number of loop instructions required to complete the loop instruction.

Compiler 214 calculates ISTART by adding NPER to the value NCPU and multiplying this integer value by one minus NCPU (*e.g.*, ISTART = (NCPU-1) * (NPER + NCPU) ) (step 430). Compiler 214 calculates IEND by adding ISTART to NPER (*e.g.*, IEND = ISTART + NPER ) (step 435).

If on the other hand, NCPU is greater than NEXTRA, then compiler 214 calculates ISTART by adding NPER to the value NCPU, multiplying this integer value by one minus NCPU, and then adding one to this value (*e.g.*, ISTART = 1 + (NCPU-1) * (NPER + NCPU) ). Compiler 214 then calculates IEND by adding ISTART to NPER (step 445). Whether, NCPU is less than or equal to NEXTRA or greater than NPCU, the loop instruction is repeated until all the extra iterations have been allocated to the processors (step 450).

The complete process is more fully shown, albeit for exemplary purposes only, in the following FORTRAN program loop instruction code. This loop instruction code provides allocation of a process with fifteen iterations.

```
            NPER = 15 / NCPU
            NEXTRA = 15 - (NPER *  NCPU)
      C$PAR DOALL
            DO 20, NCPU = 1, NCPU
            if (NCPU .LE. NEXTRA) then
                  ISTART = (NCPU-1) * (NPER + NCPU)
                  IEND = ISTART + NPER
            else
                  ISTART = 1 + (NCPU-1) * (NPER + NEXTRA)
                  IEND = ISTART + NPER- 1
            end if
            Do 10, I =  ISTART, IEND
                  CALL DO WORK (I)   [i.e., some function]
      10    Continue
      20    Continue
```

The above code, which is depicted as method 400 in Fig. 4, provides a more efficient means to allocate processor resources then conventional distribution schemes. Table II shows that the scalability associated with the method and systems consistent with the preferred embodiment is greatly improved over the previous example. This example shows the distribution, run time results, and scalability for a program with fifteen iterations allocated between one and eight processors.

TABLE II

| NCPUs | Distribution | Runtime | Scalability |
|-------|--------------|---------|-------------|
| 1 | 15 | 15X | 1 |
| 2 | 8,7 | 8X | 0.938 |
| 4 | 4,4,4,3 | 6X | 0.938 |

TABLE II (continued)

| NCPUs | Distribution | Runtime | Scalability |
|---|---|---|---|
| 8 | 2,2,2,2,2,2,2,1 | 2X | 0.938 |

The resulting distribution provides a more efficient allocation of resources, with a scalabilty factor closer to that of a single processor system and a significant decrease in the program's runtime over the conventional method.

It will be apparent to those skilled in the art that various modifications and variations can be made to disclosed embodiments of the present invention without departing from the scope or spirit of the invention. For example, while an example is provided in the Fortran programming language, systems and methods consistent with this invention will operate as effectively on any type distributed or parallel computing environment. Further, in methods and systems consistent with the present invention, above distribution algorithm is stored on each of the processors in the network, and therefore can be run using any of the distributed processors in the network.

Other embodiments of the invention will be apparent to those skilled in the art from consideration of the specification and practice of the embodiments of the invention disclosed herein. The specification and examples should be considered exemplary, with the true scope and spirit of the invention being indicated by the following claims and their full range of equivalents.

**Claims**

1.  In a data processing system with a number of processors and a program having a number of loop iterations, a method comprising the steps of:

    creating a thread for each of the processors;
    assigning an equal number of the loop iterations to each of the created treads such that at least two loop iterations remain unassigned; and
    distributing the unassigned loop iterations to at least two of the threads.

2.  The method of claim 1, wherein the processors reside on multiple machines, and wherein the step of assigning includes the substeps of

    assigning the equal number of the loop iterations to the processors on the multiple machines.

3.  The method of claim 2, wherein the step of distributing the unassigned loop iterations includes the substep of

    distributing the unassigned loop iterations among to the processors on the multiple machines.

4.  The method of claim 3, wherein the program is a written in Fortran code and wherein the step of assigning includes the substep of

    assigning a Fortran loop iteration to each of the created threads such that at least two loop iterations remain unassigned.

5.  The method of claim 4, wherein the step of distributing includes the substep of

    distributing the unassigned Fortran loop iterations to at least two of the threads.

6.  In a data processing system with a number of processors and a program having a number of loop iterations, a method comprising the steps of:

    receiving code into the data processing system that contains an outer loop that iterates from one to a number of processors and an inner loop that performs divided functionality for parallelization;
    compiling the code to generate a program; and
    executing the program such that the iterations of the inner loop become distributed over the processors.

7.  The method of claim 6, wherein the processors reside on multiple machines, and wherein the step of executing includes the substeps of:

determining the number of processors; and

distributing the iterations of the inner loop among the processors on the multiple machines.

8. In a data processing system having a plurality of processors, the system comprising:

a memory containing a program store with a plurality of iterations, the program having code configured to distribute the iterations among the processors such that each processor is assigned an equal number of iterations to perform with at least two iterations that remain unassigned and configured to assign the unassigned iterations to at least two of the processors; and

at least one of the processors configured execute the program.

9. The system of claim 8, wherein at least one of the processors operates in parallel and includes a number of threads, and wherein the code is further configured to assign the plurality of iterations to the number of threads.

10. The system of claim 8, wherein the program includes an inner loop and an outer loop, and wherein the outer loop is configured to run from one to the number of processors among the plurality of processors.

11. The system of claim 10, wherein the plurality of processors are located in a single machine.

12. The system of claim 11, wherein the plurality of processors are located on multiple machines.

13. In a data processing system with a number of processors and a program having a number of loop iterations, the system comprising:

means for receiving code into the data processing system, wherein the code contains an outer loop that iterates from one to a number of processors and an inner loop that performs divided functionality for parallelization;
means for compiling the code to generate a program; and
means for executing the program such that the iterations of the inner loop become distributed over the processors.

14. The system of claim 13, wherein the processors reside on multiple machines, and wherein the means for executing includes

means for determining the number of processors; and
means for distributing the iterations of the inner loop among the processors on the multiple machines.

**FIG. 1**

EP 1 031 923 A2

**COMPUTER**

MEMORY 210

COMPILER 214

PROGRAM 212

OPERATING SYSTEM 216

SECONDARY STORAGE 220

CPU 230

VIDEO DISPLAY 250

INPUT DEVICE 240

NETWORK 110

EP 1 031 923 A2

*FIG. 2*

<u>300</u>

```
START
```

310

```
PREPARE PARALLELIZATION PROGRAM
```

320

```
COMPILER GENERATES CODE
```

330

```
OPERATING SYSTEM EXECUTES CODE
```

```
END
```

**FIG. 3**

START

405 — DETERMINE NUMBER OF CPUs (NCPU)

410 — DETERMINE NUMBER OF PROCESS ITERATIONS (I)

415 — CALCULATE NUMBER OF ITERATIONS PER CPU (NPER)

420 — CALCULATE NUMBER OF "EXTRA" ITERATIONS (NEXTRA)

425 — IS NCPU LESS THAN OR EQUAL TO NEXTRA?

Yes

430 — ISTART = (NCPU-1) * (NPER +NCPU)

435 — IEND = ISTART + NPER

NO

440 — ISTART = 1 + (NCPU -1) * (NPER + NEXTRA)

445 — IEND = ISTART + NPER-1

450 — DO I = ISTART, IEND

END

**FIG. 4**